# EUROPÄISCHE PATENTANMELDUNG

(11) **EP 1 845 597 A1**
(43) Veröffentlichungstag der Anmeldung: **17.10.2007**
(21) Anmeldenummer: 07006926.5
(22) Anmeldetag: 03.04.2007
(51) Int. Cl.: H02G 3/06

(54) **Halteelement zur Lagesicherung eines Kabelschutzes**

(30) Priorität: 13.04.2006 DE 202006006069 U
(71) Anmelder: Murrelektronik GmbH, 71570 Oppenweiler (DE)
(72) Erfinder: Schuffenhauer, Andreas, 09113 Chemnitz (DE); Keller, Alexander, 08280 Aue (DE); Schöne, Bernd, 08297 Zwönitz (DE)
(74) Vertreter: Wasmuth, Rolf

(57) **Zusammenfassung**

Ein Halteelement (6) besitzt Mittel zur Lagesicherung eines Kabelschutzes (5). Das Halteelement (6) besitzt Mittel zur Fixierung an einem Kabel (3), so dass der Kabelschutz (5) direkt an dem Kabel (3) fixiert werden kann.

## Beschreibung

Die Erfindung betrifft ein Halteelement, das Mittel zur Lagesicherung eines schlauchförmigen Kabelschutzes besitzt.

Es ist bekannt, ein an einem Gerät angeschlossenes Kabel mit einem schlauchförmigen Kabelschutz zu versehen. Der Kabelschutz umgibt das Kabel mit einem Abstand. Um ein Verschieben des Kabelschutzes in Längsrichtung des Kabels zu vermeiden, wird der Kabelschutz üblicherweise am Gehäuse des Gerätes, an dem das Kabel angeschlossen ist, fixiert. Hierfür muss das Gehäuse Befestigungsmöglichkeiten für den Kabelschutz besitzen. Soll ein Kabelschutz an einem bestehenden Gerätegehäuse festgelegt werden, muss ein Halteelement verwendet werden, das für die an dem Gerätegehäuse vorgesehene Befestigung des Halteelements geeignet ist.

Der Erfindung liegt die Aufgabe zugrunde, ein Halteelement der gattungsgemäßen Art zu schaffen, das universell einsetzbar ist.

Diese Aufgabe wird durch ein Halteelement mit den Merkmalen des Anspruchs 1 gelöst.

Dadurch, dass das Halteelement nicht am Gehäuse des Gerätes, sondern an dem Kabel selbst festgelegt wird, sind am Gerätegehäuse keine Befestigungsmöglichkeiten für das Halteelement notwendig. Unabhängig von der Ausbildung des Gerätegehäuses im Bereich des Anschlusses für das Kabel kann das Halteelement universell eingesetzt werden, da es nur an dem Kabel selbst festgelegt wird.

Vorteilhaft besitzt das Halteelement eine Klemmeinrichtung zur Fixierung an dem Kabel. Dadurch kann eine sichere Fixierung des Halteelementes auf dem Kabel erreicht werden, ohne dass die Gefahr einer Beschädigung der Isolierung des Kabels besteht. Um das Halteelement auch bei Kabeln unterschiedlichen Durchmessers einsetzen zu können, ist vorgesehen, dass der Innendurchmesser der Klemmeinrichtung variabel ist. Eine einfache Montage und Herstellbarkeit des Halteelementes kann erreicht werden, wenn das Halteelement aus zwei Halbschalen gebildet ist, die über eine lösbare Rasteinrichtung miteinander verbunden sind. Die beiden Halbschalen können an gegenüberliegenden Seiten des Kabels positioniert und miteinander verrastet werden. So ist eine Fixierung auch bei angeschlossenem Kabel möglich. Dadurch, dass die Rasteinrichtung lösbar ausgebildet ist, kann das Halteelement von dem Kabel auf einfache Weise demontiert werden.

Eine einfache Ausgestaltung der Rasteinrichtung ergibt sich, wenn die Rasteinrichtung mindestens einen an einer Halbschale angeordneten Raststeg besitzt, der in eine an der anderen Halbschale angeordneten Aufnahme ragt. Eine sichere Fixierung bei geringen Betätigungskräften kann erreicht werden, wenn der Raststeg und/oder die Aufnahme eine Vielzahl von Rasten besitzt. Die Vielzahl der Rasten erlaubt außerdem eine gute Einstellbarkeit des Innendurchmessers der Klemmeinrichtung. Um einen festen Sitz des Halteelementes auf dem Kabel zu gewährleisten, ist vorgesehen, dass das Halteelement im Bereich der Klemmeinrichtung mindestens eine nach innen ragende Noppe und/oder mindestens einen nach innen ragenden Quersteg besitzt. Die Noppe und der Quersteg verformen das Kabel, so dass sich ein sicherer Sitz des Halteelementes auf dem Kabel ergibt.

Zweckmäßig besitzt das Halteelement einen Anschlag für den Kabelschutz. Dadurch wird auf einfache Weise eine Lagesicherung des Kabelschutzes gegenüber dem Halteelement erreicht.

Es ist vorgesehen, dass das Halteelement eine Hülse besitzt, in der zwei Stege gehalten sind, wobei die beiden Stege einander gegenüberliegend angeordnet sind und jeweils eine Halbschale eines Stutzens tragen. An der Hülse ist insbesondere die Klemmeinrichtung angeordnet. Vorteilhaft bildet die Hülse den Anschlag für den Kabelschutz. Die Hülse kann mit einem größeren Durchmesser als der Kabelschutz gefertigt werden, so dass sich ausreichender Bauraum für die Klemmeinrichtung ergibt. Vorteilhaft sind die beiden Halbschalen des Stutzens miteinander verrastet. Das Halteelement besitzt vorteilhaft eine ins Innere des Kabelschutzes ragende Führung für den Kabelschutz. Dadurch kann ein radialer Abstand zwischen dem Kabel und dem Kabelschutz erreicht werden. Die Führung für den Kabelschutz ist insbesondere an dem Stutzen angeordnet. Eine einfache Ausgestaltung des Halteelementes ergibt sich, wenn die beiden Halbschalen des Halteelementes identisch aufgebaut sind.

Ein Ausführungsbeispiel der Erfindung wird im Folgenden anhand der Zeichnung erläutert. Es zeigen:
- Fig. 1: eine schematische Schnittdarstellung durch eine Anordnung eines Halteelementes und eines Kabelschutzes an einem Kabel,
- Fig. 2 und 3: perspektivische Darstellungen des Halteelementes,
- Fig. 4: eine perspektivische Darstellung einer Halbschale des Halteelementes aus den Fig. 2 und 3.

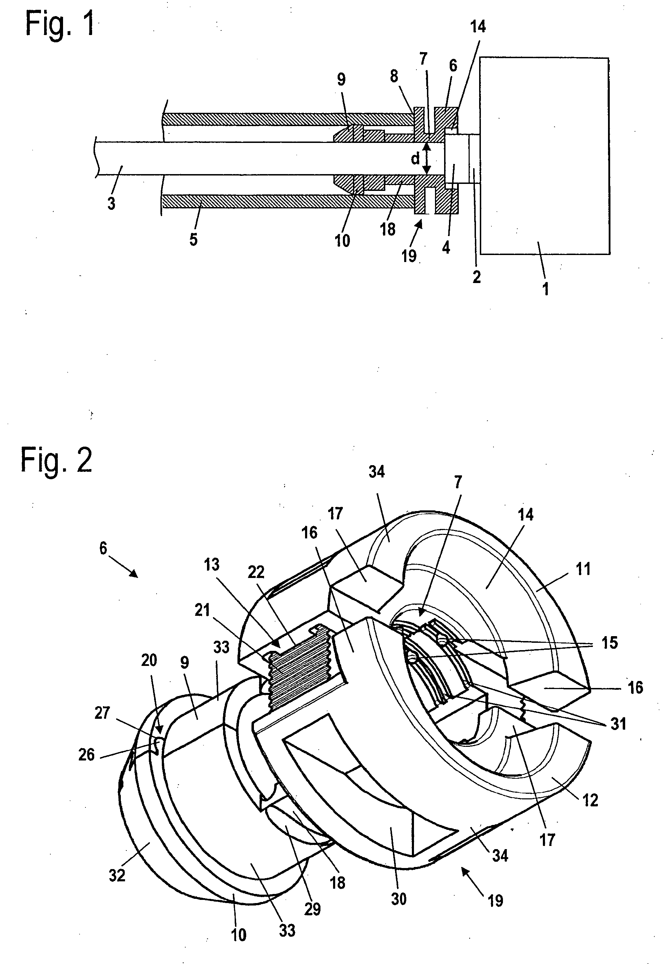

Fig. 1 zeigt schematisch ein Gerät 1 mit einem Anschlussstecker 2, an dem ein Anschlussstecker 4 eines Kabels 3 eingesteckt ist. Das Kabel 3 ist mit radialem Abstand von einem schlauchförmigen Kabelschutz 5 umgeben. Um ein Verrutschen des Kabelschutzes 5 gegenüber dem Kabel 3 zu vermeiden, ist auf dem Kabel 3 ein Halteelement 6 angeordnet, das den Kabelschutz 5 in seiner Lage fixiert. Das Halteelement 6 besitzt einen Klemmabschnitt 7, der am Innenumfang einer Hülse 19 ausgebildet ist. Der Klemmabschnitt 7 ist auf dem Kabel 3 festgeklemmt. An der dem Gerät 1 zugewandten Seite besitzt die Hülse 6 eine Aussparung 14, die den Anschlussstecker 4 des Kabels 3 teilweise übergreift. An der dem Kabelschutz 5 zugewandten Seite bildet eine Stirnseite der Hülse 19 einen Anschlag 8, an dem der Kabelschutz 5 anliegt. An der Hülse 19 ist ein Stutzen 9 über Stege 18 fixiert. Die Stege 18 und der Stutzen 9 ragen ins Innere des Kabelschutzes 5. An dem Stutzen 9 ist eine Führung 10 ausgebildet, die im Ausführungsbeispiel am Innenumfang des Kabels 5 anliegt.

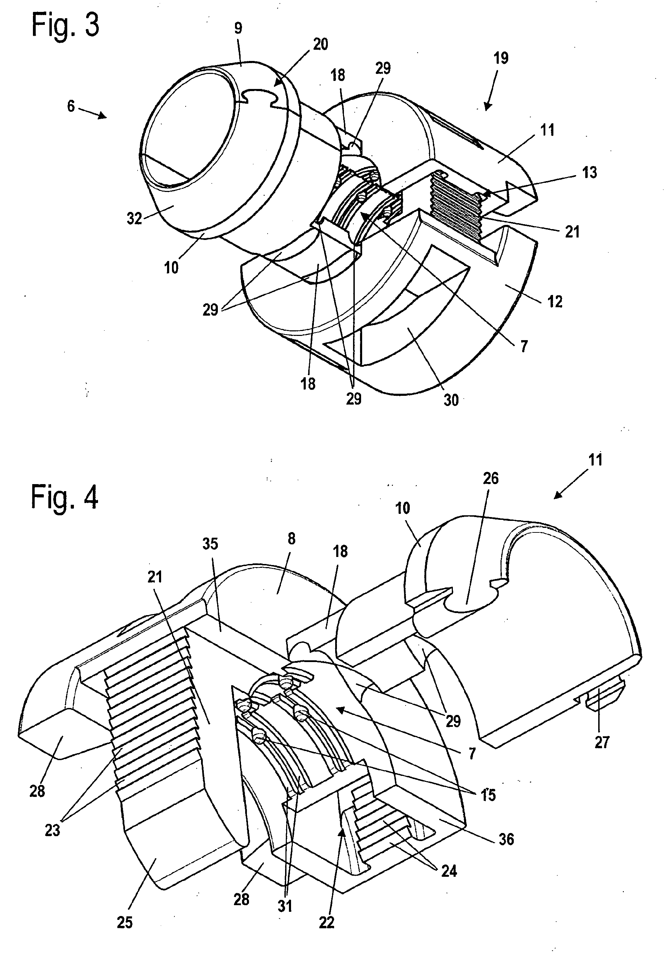

Wie die perspektivischen Darstellungen in den Fig. 2 und 3 zeigen, besteht das Halteelement 6 aus einer ersten Halbschale 11 und einer zweiten Halbschale 12. Die beiden Halbschalen 11 und 12 sind identisch zueinander ausgebildet. Jede Halbschale 11, 12 bildet eine Hälfte der Hülse 19 und eine Hälfte des Stutzens 9. Der Stutzen 9 ist aus zwei Halbschalen 33 aufgebaut, die jede über einen Steg 18 mit einer Halbschale 34 der Hülse 19 verbunden sind. Jede Halbschale 11, 12 besitzt demnach eine Halbschale 33, einen Steg 18 und eine Halbschale 34. Die Stege 18 besitzen an ihren der Hülse 19 und dem Stutzen 9 zugewandten Seiten sowohl auf der dem Kabel 3 als auch auf der dem Kabelschutz 5 zugewandten Seite Quernuten 29. Dadurch sind die Halbschalen 34 der Hülse 19 gegenüber den Halbschalen 33 des Stutzens 9 in radialer Richtung begrenzt beweglich. Wie die Fig. 2 und 3 zeigen, besitzt die Hülse 19 an ihrem Außenumfang Aussparungen 30.

Die beiden Halbschalen 33 des Stutzens 9 sind über eine Verrastung 20 miteinander verbunden. Wie Fig. 2 und Fig. 4 zeigen, ist die Verrastung 20 durch einen Rastzapfen 26 gebildet, der in eine Rastaufnahme 27 einragt. Jede Halbschale 33 besitzt eine Rastaufnahme 27 sowie einen Rastzapfen 26 auf der gegenüberliegenden Seite.

Wie die Fig. 2 und 3 zeigen, ist an dem Stutzen 9 ein konischer Abschnitt 32 angeordnet, der benachbart zur Führung 10 auf die der Hülse 19 abgewandte Seite ragt und sich mit zunehmender Entfernung zur Hülse 19 verjüngt.

Die beiden Halbschalen 11 und 12 sind über eine an der Hülse 19 angeordnete Rasteinrichtung 13 miteinander verbunden. Die Rasteinrichtung 13 ist durch zwei Raststege 21 gebildet, die jeweils an einer der Halbschalen 11 und 12 angeordnet sind und zur anderen Halbschale 12, 11 hin ragen. Den Raststegen 21 gegenüberliegend ist in den Halbschalen 11 und 12 jeweils eine Aufnahme 22 ausgebildet. Wie auch Fig. 4 zeigt, besitzen die Raststege 21 an ihrer radial nach außen ragenden Außenseite eine Vielzahl von Rasten 23. An der radial außen liegenden Seite der Aufnahmen 22 ist eine Vielzahl von Rasten 24 angeordnet, mit denen die Rasten 23 eines Raststegs 21 zusammenwirken. Wie Fig. 4 zeigt, besitzt der Raststeg 21 an seiner der gegenüberliegenden Halbschale 12 zugewandten Seite eine Schräge 25. Die Schräge 25 tritt bei entsprechendem Zusammenschieben der beiden Halbschalen 11 und 12 an der Aufnahme 22 im Bereich der Umfangswand der Hülse 19 aus. Durch die Schräge 25 steht der Raststeg 21 nur geringfügig über die Umfangswand der Hülse 19 über. Durch Druck auf die Schräge 25 kann die Verrastung zwischen dem Raststeg 21 und der Aufnahme 22 gelöst und die beiden Halbschalen 11 und 12 voneinander getrennt werden.

Aufgrund der Rasteinrichtung 13 ist der Innendurchmesser d (Fig. 1) im Bereich des Klemmabschnitts 7 variabel. Im Klemmabschnitt 7 sind radial nach innen ragende Noppen 15 und radial nach innen ragende Querstege 31 an den Halbschalen 11 und 12 angeordnet. Aufgrund der Vielzahl der Rasten 23 und 24 kann der Innendurchmesser d im Bereich der Klemmeinrichtung 7 gut eingestellt und auf den Durchmesser des Kabels 3 angepasst werden. Dadurch, dass der Innendurchmesser d variabel ist, kann das Halteelement 6 an Kabeln mit unterschiedlichem Außendurchmesser festgelegt werden.

Wie insbesondere Fig. 2 zeigt, besitzt die Hülse 19 radial außerhalb der Aussparung 14 an jeder Halbschale 11, 12 eine Vorsprung 16, der in eine Aussparung 17 der gegenüberliegenden Halbschale 11, 12 ragt. Die beiden Halbschalen 11 und 12 können im Bereich des Vorsprungs 16 und der Aussparung 17 mittig geteilt sein, so dass die Trennebene 28 zwischen den Aussparungen 16 und den Vorsprüngen 17 die Längsmittellinie des Kabels 3 und des Kabelschutzes 5 mit umfasst, wenn die beiden Halbschalen 34 der Hülse 19 vollständig zusammengesteckt und auf Anschlag miteinander verrastet sind. Im Bereich der Rasteinrichtung 13 sind die beiden Halbschalen 11 und 12 vorteilhaft in Trennebenen 35, 36 geteilt, die zu dieser Trennebene 28 versetzt liegen, wobei die Trennebene 35 im Bereich der Aussparung 22 zur gegenüberliegenden Halbschale hin und die Trennebene 36 im Bereich des Raststegs 21 von der gegenüberliegenden Halbschale weg versetzt ist. Dadurch lässt sich ein großer Verstellweg realisieren.

## Patentansprüche

1. Halteelement, das Mittel zur Lagesicherung eines schlauchförmigen Kabelschutzes (5) besitzt,
**dadurch gekennzeichnet, dass** das Halteelement (6) Mittel zur Fixierung an einem Kabel (3) besitzt.

2. Halteelement nach Anspruch 1,
**dadurch gekennzeichnet, dass** das Halteelement (6) eine Klemmeinrichtung (7) zur Fixierung an dem Kabel besitzt, und der Innendurchmesser (d) der Klemmeinrichtung (7) vorzugsweise variabel ist.

3. Halteelement nach Anspruch 2,
**dadurch gekennzeichnet, dass** das Halteelement (6) aus zwei Halbschalen (11, 12) gebildet ist, die über eine lösbare Rasteinrichtung (13) miteinander verbunden sind.

4. Halteelement nach Anspruch 3,
**dadurch gekennzeichnet, dass** die Rasteinrichtung (13) mindestens einen an einer Halbschale (11, 12) angeordneten Raststeg (21) besitzt, der in eine an der anderen Halbschale (12, 11) angeordnete Aufnahme (22) ragt und vorzugsweise der Raststeg (21) und/oder die Aufnahme (22) eine Vielzahl von Rasten (23, 24) besitzt.

5. Halteelement nach einem der Ansprüche 2 bis 4,
**dadurch gekennzeichnet, dass** das Halteelement (6) im Bereich der Klemmeinrichtung (7) mindestens eine nach innen ragende Noppe (15) besitzt.

6. Halteelement nach einem der Ansprüche 2 bis 4,
**dadurch gekennzeichnet, dass** das Halteelement (6) im Bereich der Klemmeinrichtung (7) mindestens einen nach innen ragenden Quersteg (31) besitzt.

7. Halteelement nach einem der Ansprüche 1 bis 6,
**dadurch gekennzeichnet, dass** das Halteelement (6) einen Anschlag (8) für den Kabelschutz (5) besitzt.

8. Halteelement nach einem der Ansprüche 1 bis 7,
**dadurch gekennzeichnet, dass** das Halteelement (6) eine Hülse (19) besitzt, an der zwei Stege (18) gehalten sind, wobei die beiden Stege (18) einander gegenüberliegend angeordnet sind und jeweils eine Halbschale (33) eines Stutzens (9) tragen, wobei vorzugsweise an der Hülse (19) die Klemmeinrichtung (7) angeordnet ist und die Hülse (19) insbesondere den Anschlag (8) für den Kabelschutz (5) bildet.

9. Halteelement nach Anspruch 8,
**dadurch gekennzeichnet, dass** die beiden Halbschalen (39) des Stutzens (9) miteinander verrastet sind.

10. Klemmeinrichtung nach Anspruch 8 oder 9,
**dadurch gekennzeichnet, dass** das Halteelement (6) eine ins Innere des Kabelschutzes (5) ragende Führung (10) für den Kabelschutz (5) besitzt und die Führung (10) für den Kabelschutz (5) vorzugsweise an dem Stutzen (9) angeordnet ist.

11. Halteelement nach einem der Ansprüche 3 bis 10,
**dadurch gekennzeichnet, dass** die beiden Halbschalen (11, 12) des Halteelementes (6) identisch aufgebaut sind.
